# EUROPEAN PATENT SPECIFICATION

(11) **EP 1 787 303 B1**
(45) Date of publication and mention of the grant of the patent: **26.12.2012**
(21) Application number: 05778011.6
(22) Date of filing: 08.09.2005
(51) Int. Cl.: G21C 7/10, G21C 7/113

(54) **A CONTROL ROD FOR A NUCLEAR PLANT**
STEUERSTAB FÜR EIN KERNKRAFTWERK
TIGE DE COMMANDE DESTINEE A UNE CENTRALE NUCLEAIRE

(30) Priority: 09.09.2004 SE 0402163
(43) Date of publication of application: 23.05.2007
(73) Proprietor: Westinghouse Electric Sweden AB, 721 63 Västerås (SE)
(72) Inventor: TÄGTSTRÖM, Per, S-784 40 Borlänge (SE); REBENSDORFF, Björn, S-722 10 Västerås (SE); HJÖRVARSSON, Björgvin, S-741 93 Knivsta (SE); ISBERG, Peter, S-725 92 Västerås (SE)
(74) Representative: Israelsson, Stefan
(86) International application number: PCT/SE2005/001313
(87) International publication number: WO 2006/041368

(56) References cited:
- GB-A- 1 225 947
- GB-A- 1 225 947
- GB-A- 1 386 689
- GB-A- 1 386 689
- JP-A- 2 025 794
- US-A- 3 876 403
- US-A- 3 876 403
- US-A- 4 752 440
- US-A- 4 752 440
- US-A- 5 592 522
- DATABASE WPI Week 198817 Derwent Publications Ltd., London, GB; AN 1988-117063 XP002472364 & JP 57 039388 A (TOSHIBA KK) 4 March 1982 (1982-03-04)
- DATABASE WPI Week 198544 Derwent Publications Ltd., London, GB; AN 1985-273150 XP002472365 & JP 60 185193 A (TOSHIBA KK) 20 September 1985 (1985-09-20)
- PATENT ABSTRACTS OF JAPAN vol. 014, no. 169 30 March 1990 & JP 02 025 794 A (TOSHIBA CORP) 29 January 1990

## Description

### BACKGROUND OF THE INVENTION AND PRIOR ART

The present invention relates to a control rod for a nuclear plant according to the preamble of claim 1.

In nuclear plants, compounds containing boron as neutron absorber are frequently used. Boron is used as absorber material because the boron isotope B¹⁰ has a very good absorption capacity of thermal neutrons. Boron, for example in the form of boron carbide, is therefore often used as absorption material in control rods both in boiling water reactors BWR and in pressure water reactors PWR. The following reaction occurs during such an absorption B¹⁰+ n¹ → Li⁷+ He⁴.

Consequently, the gas helium is formed when the boron isotope B¹⁰ absorbs thermal neutrons. The helium gas formed gives rise to an increased inner pressure in the space enclosing the absorber material in the control rod. In order not to let the inner pressure be too high in this space, the amount of absorption material has to be accurately determined. Normally, the space is filled to about 70% with boron carbide. With such a grade of filling of the space, there is no place for the helium gas which is formed during the absorption process. Such a limited filling grade of absorption material in said space results in a corresponding limitation of the neutron absorbing capacity of the control rod.

### SUMMARY OF THE INVENTION

The object of the present invention is to provide a control rod having a design which allows a reduction of the gas pressure created in the spaces of the control rod, which contain absorber material, during an absorption process of thermal neutrons.

The above-mentioned object is achieved by the control rod defined in claim 1. As soon as the absorber material absorbs neutrons during operation of the nuclear plant a gaseous substance is thus formed and the pressure increases within the enclosed space of the control rod comprising the absorber material. Consequently, the filter member here has the function to allow a passage of the formed gas out from the space and to the surroundings. Hereby, it is in an effective manner prevented that the pressure inside the space becomes too high. The difference in pressure between the space and the surroundings forms a natural driving source which forces the gas through the filter member and cut to the surroundings. The filter member shall also have the property to prevent the water, which surrounds the control rod, from penetrating into the space through the filter member. By the use of such a filter member, the filling grade of absorption material in said space does not need to be reduced to allow receiving of the gaseous substance. Therefore, the control rod may be given a higher filling grade of absorber material and thereby the control rod obtains a larger neutron absorbing capacity and a longer lifetime than a corresponding conventional control rod.

According to a preferred embodiment of the present invention, the filter member comprises a material with an atomic structure comprising passages, which have a size such that only substances, consisting of atoms or molecules which are smaller than the size of a water molecule, are allowed to diffuse through the filter member. A material having such dimensioned passages allows a diffusion of gaseous or liquid substances, which have a smaller atomic or molecule size than water molecules. Hereby, gaseous substances in said space, which are formed during the absorption process, may diffuse through the passages and out from the space. However, the limited size of the passages makes a diffusion of water molecules through the filter member in an opposite direction impossible. Said gaseous substance is usually helium and thus the passages of the filter member must have at least a size such that helium atoms can pass through the filter member. Helium has an atomic diameter of 100 pm. Since helium has such a small atomic diameter, it is not difficult to find solid materials with an atomic structure which allows passage of helium.

According to another preferred embodiment of the present invention, the filter member comprises a metal material. Metals disclose a crystalline structure comprising closely packed atoms. Metals or metal alloys, which comprise relatively large atoms, disclose usually passages in the crystalline structure of a size which allows passage of helium atoms. Alternatively, the filter member may comprise an oxide of a transition metal. Other alternatives are aluminium oxide or silicon oxide. Aluminium oxide is substantially insoluble in water and it is present in a plurality of crystalline forms. Silicon oxide is present in amorphous form as well as in a number of crystalline forms. According to a further alternative, the filter member may comprise a ceramic material. Ceramic materials are characterized in that they withstand high temperatures and hard chemical environments. Such a ceramic material may comprise silicon. By a suitable design of a ceramic material, it is possible to dimension the size of the passages such that the atoms and molecules up to a certain size are only allowed to pass. In certain cases, it could be suitable that the filter member comprises mixtures of the above-mentioned materials.

According to another preferred embodiment of the present invention, the filter member has a location in the control rod such that it forms a connection between said space and the surroundings. Consequently, the filter member comprises passages within a specified size range, which thereby extend between said space and the surroundings. When the pressure increases in said space, the small helium atoms will be pressed out through the passages of the filter member to the surroundings. On the other hand, the significantly larger water molecules are prevented from passing in via the too narrow passages of the filter. Advantageously, the filter member is attached to the control rod in an existing channel which extends between said space and the surroundings. By attaching the filter member in such an already existing channel in the control rod, only smaller modifications need to be done of already existing control rods. Preferably, the filter member is attached by means of welding in said channel. Thereby, the filter member provides a strength and tight attachment in the control rod.

According to another preferred embodiment of the invention, the absorber material comprises boron. Advantageously, the absorber material comprises boron carbide which is frequently used in control rods both in boiling water reactors BWR and in pressure water reactors PWR. Boron carbide comprises the boron isotope B¹⁰. The boron isotope B¹⁰ has a great absorbing capacity of thermal neutrons. Lithium and helium is formed with the boron isotope B¹⁰ as absorption material. Consequently, it is necessary that the filter member allows a diffusion of the helium formed during the absorption process such that the pressure inside the control rod does not becomes too high. It is also necessary that the filter member prevents water from penetrating into the space where it otherwise reacts with the formed lithium.

According to the present invention, the nuclear plant is a boiling water reactor BWR. The control rods of a boiling water reactor comprise four control rod blades which each, at an outer edge portion, comprises a first channel connecting the drilled holes to each other, which are filled with absorption material. The first channel is intended to level out the pressure differences between the hole-shaped spaces. Since conventional control rods of boiling water reactors thus comprise four control rod blades, accordingly four filter members need to be provided in a control rod. Preferably, the filter member is provided at an outlet aperture of an existing second channel, which is connected to the first channel and used to pressure test the space during manufacturing of the control rod blade. This outlet aperture of the second channel is plugged up in a conventional control rod by means of a metal plug. Instead, to plug up this outlet aperture with a filter member with a corresponding shape and size, includes substantially no additional work in comparision with the manufacturing of a conventional control rod.

### BRIEF DESCRIPTION OF THE DRAWINGS

In the following, a preferred embodiment of the invention is described as an example with reference to the attached drawings, on which:
- Fig. 1: shows a control rod of a boiling water reactor and
- Fig. 2: shows a control rod blade of a control rod, which is provided with a filter member according to the present invention.

### DETAILED DESCRIPTION OF A PREFERRED EMBODIMENT OF THE INVENTION

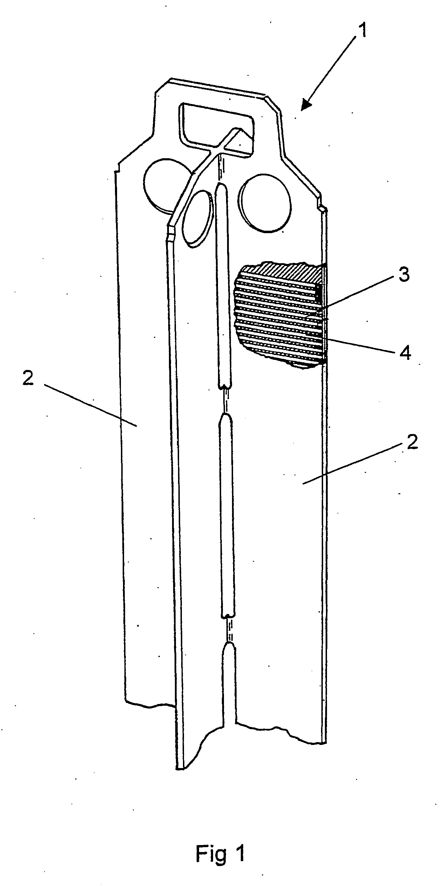

Fig. 1 shows a control rod 1 for controlling the neutron flux in a boiling water reactor (BWR). The control rod 1 comprises four control rod blades 2 which each is directed at a right angle in relation to the adjacent control rod blades 2. The control rod blades 2 comprise a plurality of drilled holes 3, which are arranged in rows above each other and which extend from a free edge portion of the control rod blade 2 and in a direction towards a centre, where the control rod blades 2 meet. The control rod blades 2 are manufactured of a sheet material which preferably is of steel and has a thickness of 7-8 mm. Thereby, the holes 3 drilled in the control rod blades 2 may have a diameter of 5-6 mm. The holes 3 are filled with an absorber material 4. The absorber material may be designed as solid elongated rods 4 of a neutron absorbing material, such as boron carbide, B₄C. The absorber rods 4 may have a length of about 100 mm and a substantially circular cross section such that they are insertable into the holes 3.

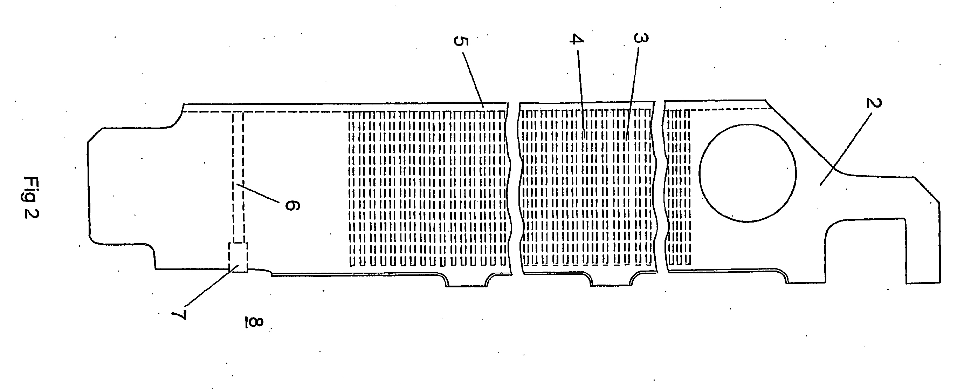

Fig. 2 shows a control rod blade 2 of the control rod 1 shown in Fig. 1. The drilled holes 3 arranged above each other in rows open up in a first elongated channel 5 which extends along substantially the whole free edge portion of the control rod blade 2. The first elongated channel 5 is arranged to connect the drilled holes 3 with each other such that a pressure equalizing is obtained between the holes 3. A second channel 6 extends from the first channel 5 to an outlet aperture at a lower internal portion of the control rod blade 2. The second channel 6 is an existing leak seeking channel.

The control rod blade 2 is provided with an elongated milled recess at the free edge portion during a manufacturing process. Thereafter, the holes 3 are drilled in the recess in rows above each other. The absorber rods 4 are arranged in the holes 3. Thereafter, the absorber material is enclosed by rolling the legs of the recess together. Thereafter, the end surfaces of the legs are welded together by an elongated welding joint such that a hermetic and pressure strength enclosure is created forming the first channel 5. Alternatively, the first channel 5 may be created by welding an elongated cover member over the recess along the free edge surface of the control rod blade. Hereby, the cover element forms a wall surface of the first channel 5. After the welding operation, a vacuum pump is connected to the outlet aperture of the second channel 6 for controlling that the first channel 5 and the holes 3 form a hermetically closed space in the control rod blade 2. Finally, a sealing plug is welded to the outlet aperture of the second channel 6. The sealing plug comprises, according to the present invention, a filter member 7. The filter member 7 comprises a material having an atomic structure with passages of a defined size, which extend between the second channel 6 and the surroundings 8. During operation of the boiling water reactor, the surroundings 8 of the control rod blades 2 consists of cooling water.

During operation of the boiling water reactor, the absorber rods 4 absorb neutrons. Hereby, lithium and helium are formed. Consequently, the filter member 7 comprises a material with an atomic structure with passages of a defined size. The passages have a size such that helium, which consists of relatively small atoms, are allowed to pass through the passages. The helium, which is formed during the absorption process in the holes 3, is spread such that it also fills out the first channel 5 and the second channel 6. Concurrently with the formation of helium, the pressure increases and the helium atoms are pressured by means of the positive pressure out through the passages of the filter member 7 to the surroundings 8. Consequently, the helium formed during the absorption process will successively be guided out via the filter member 7. Thereby, it is prevented that too high positive pressures arise in the closed spaces of the control rod blades 2. Only about 70% of the holes 3 of conventional control rod blades 2 are filled with absorber materials because the remaining space of the holes 3 is needed for receiving the helium which is formed during the absorption process. With the present invention, the holes 3 of the control rod blades may obtain an essentially higher filling grade of absorber material 4. Thereby, the control rod blades 2 obtain a higher absorption of neutrons and a longer lifetime than a conventional control rod blade. The passages of the filter member 7 have an upper, limited size which is dimensioned such that water molecules are prevented from passing through the filter member 7. It is thus secured that the surrounding cooling water can not leak in, via the passages of the filter member 7, to the absorber rods 4 and react with the lithium formed during the absorption process.

Consequently, the filter member 7 comprises a material having an atomic structure which comprises passages of a size such that helium atoms are allowed to pass through the passages while water molecules are prevented from passing through the filter member 7. Another requirement on the filter member is that it has to comprise a material which is completely resistant in the environment prevailing in a nuclear plant and thus not influenced by the cooling water or the radiation which is present herein. Since helium has such a small atomic radius, it is not difficult to find materials having an atomic structure which let through helium atoms. Hereby, the filter member 7 may comprise a metal material. Metals disclose a crystalline structure comprising closely packed atoms. Metals or metal alloys which comprise relatively large atoms usually disclose passages in the crystalline structure of a size which allow passage of helium atoms. It shall here be noted that the control rod blades 2 also are manufactured of a metal material. However, this material has such properties and/or such a thickness that the let through for helium and lithium is negligible in relation to the let through of the filter member for these gases. Alternatively the filter member 7 may comprise an oxide of a transition metal. Other alternatives are aluminium oxide or silicon oxide. Aluminium oxide is substantially insoluble in water and is present in a plurality of crystalline forms. Silicon oxide is present in an amorphous form as well as in a number of crystalline forms. The filter member 7 may also comprise a ceramic material. Ceramic materials are characterized in that they withstand hight temperatures and hard chemical environments. The filter member 7 may also comprise mixtures of the above-mentioned materials.

The present invention is not in any way limited to the embodiments described on the drawings but may be modified freely within the scope of the claims. The invention is not limited to a control rod in a boiling water reactor BWR but it is also possible to apply in a control rod to a pressure water reactor PWR.

## Claims

1. A control rod for a boiling water reactor (BWR), wherein the control rod (1) is arranged to be provided in a core, which comprises a number of fuel assemblies, and to be in contact with a coolant which comprises water, wherein the control rod (1) comprises control rod blades (2) with a plurality of holes (3) which are arranged to be filled with absorber materials (4) for allowing absorption of neutrons during operation of the nuclear plant, wherein these holes (3) are connected by means of a first channel (5) intended to level out the pressure differences between the holes and wherein the absorber material (4) has the property to generate at least one gaseous substance during said absorption process, **characterised in that** the control rod (1) comprises at least a filter member (7), which is in connection with the first channel (5), and that allows a diffusion of the gaseous substance through the filter member (7) and out from the first channel (5) at the same time as it prevents a diffusion of the surrounding water into the first channel (5).

2. A control rod according to claim 1, **characterised in that** the filter member (7) comprises a material with an atomic structure comprising passages, which have a size such that only substances, consisting of atoms or molecules which are smaller than the size of a water molecule, are allowed to diffuse through the filter member (7).

3. A control rod according to claim 2, **characterised in that** the passages of the filter member (7) have a size such that at least helium atoms are allowed to diffuse through.

4. A control rod according to any one of the preceding claims, **characterised in that** the filter member (7) comprises a metal material.

5. A control rod according to any one of the preceding claims, **characterised in that** the filter member (7) comprises en oxide of a transition metal.

6. A control rod according to any one of the preceding claims, **characterised in that** the filter member (7) comprises a ceramic material.

7. A control rod according to any one of the preceding claims, **characterised in that** the filter member (7) has a location in the control rod (1) such that it consists a connection between said space (3) and a surrounding (8).

8. A control rod according to claim 7, **characterised in that** the filter member (7) is attached in the control rod (1) in an existing channel (5, 6) which extends between said space (3) and the surroundings (8).

9. A control rod according to claim 8, **characterised in that** the filter member (7) is attached to the control rod (1) by means of welding.

10. A control rod according to any one of the preceding claims, **characterised in that** the absorber material (4) comprises boron.

11. A control rod according to claim 10, **characterised in that** the absorber material (4) comprises the boron isotope B¹⁰.

12. A control rod according to any one of the preceding claims, **characterised in that** the filter member (7) is provided at an outlet aperture of a second channel (6) in the control rod blade (2), which second channel (6) is in connection with the first channel (5) and is used to pressure test the space (3) during manufacturing of the control rod blade (2).

## Patentansprüche

1. Steuerstab für einen Siedewasserreaktor (BWR = SWR), wobei der Steuerstab (1) für eine Bereitstellung in einem Kern, welcher eine Anzahl von Brennelementen aufweist, und für einen Kontakt mit einem Kühlmittel, welches Wasser aufweist, ausgebildet ist, wobei der Steuerstab (1) Steuerstabblätter (2) mit einer Vielzahl von Löchern (3) aufweist, welche für eine Füllung mit Absorbermaterialien (4) zur Ermöglichung von Absorption von Neutronen während eines Betriebs des Nuklearkraftwerks ausgebildet sind, wobei diese Löcher (3) mittels eines ersten Kanals (5), der für einen Ausgleich der Druckdifferenzen zwischen den Löchern vorgesehen ist, verbunden sind, und wobei das Absorbermaterial (4) die Eigenschaft zur Erzeugung mindestens einer gasförmigen Substanz während des Absorptionsvorgangs besitzt, dadurch gekenntzeichnet, dass der Steuerstab (1) mindestens ein Filterglied (7) aufweist, welches in Verbindung mit dem ersten Kanal (5) steht, und welches eine Diffusion der gasförmigen Substanz durch das Filterglied (7) und aus dem ersten Kanal (5) heraus ermöglicht, wie es gleichzeitig eine Diffusion des umgebenden Wassers in den ersten Kanal (5) verhindert.

2. Steuerstab nach Anspruch 1, **dadurch gekennzeichnet, dass** das Filterglied (7) ein Material mit einem Atomaufbau mit Durchgängen aufweist, welche eine solche Größe haben, dass eine Diffusion durch das Filterglied (7) hindurch nur Substanzen bestehend aus Atomen oder Molekülen, die kleiner als die Größe eines Wassermoleküls sind, ermöglicht ist.

3. Steuerstab nach Anspruch 2, **dadurch gekennzeichnet, dass** die Durchgänge des Filterglieds (7) eine solche Größe aufweisen, dass mindestens Heliumatomen eine Diffusion hindurch ermöglicht ist.

4. Steuerstab nach einem der vorhergehenden Ansprüche, **dadurch gekennzeichnet, dass** das Filterglied (7) ein metallisches Material aufweist.

5. Steuerstab nach einem der vorhergehenden Ansprüche, **dadurch gekennzeichnet, dass** das Filterglied (7) ein Oxid eines Übergangsmetalls aufweist.

6. Steuerstab nach einem der vorhergehenden Ansprüche, **dadurch gekennzeichnet, dass** das Filterglied (7) ein keramisches Material aufweist.

7. Steuerstab nach einem der vorhergehenden Ansprüche, **dadurch gekennzeichnet, dass** das Filterglied (7) eine solche Position in dem Steuerstab (1) aufweist, dass es eine Verbindung zwischen dem Raum (3) und einer Umgebung (8) bildet.

8. Steuerstab nach Anspruch 7, **dadurch gekennzeichnet, dass** das Filterglied (7) in dem Steuerstab (1) in einem vorhandenen Kanal (5, 6), welcher sich zwischen dem Raum (3) und der Umgebung (8) erstreckt, angebracht ist.

9. Steuerstab nach Anspruch 8, **dadurch gekennzeichnet, dass** das Filterglied (7) an dem Steuerstab (1) mittels Schweißen angebracht ist.

10. Steuerstab nach einem der vorhergehenden Ansprüche, **dadurch gekennzeichnet, dass** das Absorbermaterial (4) Bor aufweist.

11. Steuerstab nach Anspruch 10, **dadurch gekennzeichnet, dass** das Absorbermaterial (4) das Borisotop B¹⁰ aufweist.

12. Steuerstab nach einem der vorhergehenden Ansprüche, **dadurch gekennzeichnet, dass** das Filterglied (7) an einer Auslassöffnung eines zweiten Kanals (6) in dem Steuerstabblatt (2) vorgesehen ist, wobei der zweite Kanal (6) in Verbindung mit dem ersten Kanal (5) steht und für eine Druckprüfung des Raums (3) während der Herstellung des Steuerstabblatts (2) benutzt wird.

## Revendications

1. Barre de commande pour un réacteur à eau bouillante (BWR), dans laquelle la barre de commande (1) est agencée pour être prévue dans un coeur, qui comprend un certain nombre d'assemblages combustibles, et pour être en contact avec un liquide de refroidissement qui comprend de l'eau, dans laquelle la barre de commande (1) comprend des ailettes de barre de commande (2) avec une pluralité de trous (3) qui sont agencés pour être remplis de matériaux absorbants (4) pour permettre l'absorption de neutrons pendant le fonctionnement de la centrale nucléaire, dans laquelle ces trous (3) sont reliés au moyen d'un premier canal (5) destiné à niveler les différences de pression entre les trous et dans laquelle le matériau absorbant (4) a la propriété de générer au moins une substance gazeuse pendant ledit processus d'absorption, **caractérisée en ce que** la barre de commande (1) comprend au moins un élément de filtre (7), qui est relié au premier canal (5), et qui permet une diffusion de la substance gazeuse à travers l'élément de filtre (7) et hors du premier canal (5) en même temps qu'il empêche une diffusion de l'eau environnante dans le premier canal (5).

2. Barre de commande selon la revendication 1, **caractérisée en ce que** l'élément de filtre (7) comprend un matériau avec une structure atomique comprenant des passages, qui ont une taille telle que seules les substances, consistant en des atomes ou des molécules qui sont plus petits que la taille d'une molécule d'eau, sont autorisées à diffuser à travers l'élément de filtre (7).

3. Barre de commande selon la revendication 2, **caractérisée en ce que** les passages de l'élément de filtre (7) ont une taille telle qu'au moins les atomes d'hélium sont autorisés à diffuser à travers ceux-ci.

4. Barre de commande selon l'une quelconque des revendications précédentes, **caractérisée en ce que** l'élément de filtre (7) comprend un matériau métallique.

5. Barre de commande selon l'une quelconque des revendications précédentes, **caractérisée en ce que** l'élément de filtre (7) comprend un oxyde d'un métal de transition.

6. Barre de commande selon l'une quelconque des revendications précédentes, **caractérisée en ce que** l'élément de filtre (7) comprend une céramique.

7. Barre de commande selon l'une quelconque des revendications précédentes, **caractérisée en ce que** l'élément de filtre (7) a un emplacement dans la barre de commande (1) tel qu'il consiste en une liaison entre ledit espace (3) et un environnement (8).

8. Barre de commande selon la revendication 7, **caractérisée en ce que** l'élément de filtre (7) est fixé dans la barre de commande (1) dans un canal (5, 6) existant qui s'étend entre ledit espace (3) et les environnements (8).

9. Barre de commande selon la revendication 8, **caractérisée en ce que** l'élément de filtre (7) est fixé à la barre de commande (1) par soudage.

10. Barre de commande selon l'une quelconque des revendications précédentes, **caractérisée en ce que** le matériau absorbant (4) comprend du bore.

11. Barre de commande selon la revendication 10, **caractérisée en ce que** le matériau absorbant (4) comprend l'isotope du bore B₁₀.

12. Barre de commande selon l'une quelconque des revendications précédentes, **caractérisée en ce que** l'élément de filtre (7) est prévu au niveau d'une ouverture de sortie d'un deuxième canal (6) dans l'ailette de barre de commande (2), lequel deuxième canal (6) est relié au premier canal (5) et est utilisé pour effectuer un test de pression dans l'espace (3) pendant la fabrication de l'ailette de barre de commande (2).
